# FASCICULE DE BREVET EUROPEEN

(11) **EP 2 531 454 B1**
(45) Date de publication et mention de la délivrance du brevet: **30.03.2016**
(21) Numéro de dépôt: 11705933.7
(22) Date de dépôt: 26.01.2011
(51) Int. Cl.: C03B 7/02, C03B 7/06

(54) **PROCEDE POUR RETABLIR LE PROFIL DE TEMPERATURE SYMETRIQUE DANS UN FEEDER EN SORTIE DE COUDE, ET FEEDER POUR LA MISE EN OEUVRE DE CE PROCEDE**
VERFAHREN ZUR RÜCKSETZUNG DES SYMMETRISCHEN TEMPERATURPROFILS BEI EINEM SPEISER AM AUSGANG EINER KRÜMMUNG UND SPEISER FÜR DIE UMSETZUNG DIESES VERFAHRENS
METHOD FOR RESETTING THE SYMMETRICAL TEMPERATURE PROFILE IN A FEEDER AT THE OUTLET OF A BEND, AND FEEDER FOR IMPLEMENTING SAID METHOD

(30) Priorité: 02.02.2010 FR 1050729
(43) Date de publication de la demande: 12.12.2012
(73) Titulaire: Saint-Gobain Emballage, 92400 Courbevoie (FR)
(72) Inventeur: GONCALVES FERREIRA, Paula, F-94000 Creteil (FR); BOUILLET, Fabien, F - 21500 Montbard (FR)
(74) Mandataire: Ribeaudeau, Marion Christine
(86) Numéro de dépôt international: PCT/FR2011/050153
(87) Numéro de publication internationale: WO 2011/095728

(56) Documents cités:
- EP-A1- 0 512 900
- US-A- 4 569 055
- US-A- 4 662 927
- US-A- 4 803 698
- US-A- 5 862 169

## Description

La présente invention porte sur un procédé pour rétablir une symétrie de la distribution des températures entre les côtés droit et gauche de la section transversale d'un courant de verre fondu qui a cheminé dans un feeder et dont l'écoulement a été rendu dissymétrique par le passage dans une zone de coude, ce qui a induit une dissymétrie thermique.

Les dispositifs de transfert du verre fondu, encore appelés feeders, sont destinés à faire cheminer le verre fondu de la zone d'élaboration du verre (four de fusion) à une zone de formage (machine de formage ou de moulage). Un feeder comprend une partie inférieure en matériaux réfractaires formant un canal pour le courant de verre, isolée thermiquement par différents matériaux isolants et une partie supérieure également isolée thermiquement et formant une voûte coiffant le canal.

Un feeder peut consister en une simple ligne reliant directement le four de fusion à la machine de formage.

Toutefois, un feeder peut aussi comporter au moins une zone en coude qui permet d'adapter la forme de ce dernier aux contraintes spatiales de la ligne.

La présente invention concerne les feeders comportant au moins une zone en coude.

La température moyenne et l'homogénéité thermique du verre à la sortie du feeder sont cruciales pour le formage, en particulier pour la formation de paraisons avec les caractéristiques thermiques exigées par le procédé de fabrication. Les deux critères recherchés pour la thermique du verre à la sortie du feeder sont :
- avoir une distribution de températures la plus symétrique possible entre les côtés droit et gauche du feeder sur la section transversale du canal en sortie ;
- réduire, dans la mesure du possible en fonction de la couleur du verre, les gradients de température entre les zones les plus froides et les plus chaudes du verre dans cette même section.

Le respect de ces consignes aide à la formation des deux paraisons, gauche et droite, d'une machine double paraisons, avec une thermique similaire et des gradients de température faibles et à symétrie axiale entre le coeur et la peau de la paraison.

Une zone en coude d'un feeder est une source d'asymétries thermiques car l'écoulement du verre dans cette zone est caractérisé par un champ de vitesses asymétrique, avec des pertes de charge et des pertes thermiques différentielles entre l'intérieur et l'extérieur du coude.

Comme conséquence, dans les cas où le verre possède à l'entrée du coude un profil de température symétrique avec une veine chaude centrale, cette veine chaude du verre ne se trouve plus centrée au milieu de la section transversale du canal à la sortie du coude et les zones froides proches de la sole et des parois verticales du feeder ont généralement des températures plus basses à l'extérieur qu'à l'intérieur du coude. Si, pour des verres plus clairs, les inhomogénéités thermiques ainsi créées ont le temps d'être absorbées et de disparaître entre la zone du coude et la zone de sortie du feeder, pour les verres plus foncés, caractérisés par une longueur d'établissement thermique de l'ordre de plusieurs mètres, ceci n'est plus le cas.

Des inhomogénéités de température dans la circonférence de la paraison (goutte de verre) peuvent entraîner des hétérogénéités d'épaisseur dans la circonférence des articles (bouteilles, pots, etc.) formés.

La présente invention vise à remédier à ces inconvénients qui proviennent du fait que la veine chaude d'un écoulement de verre dans un feeder est déviée en sortie de coude, une telle déviation accentuant l'hétérogénéité des températures

La présente invention a donc d'abord pour objet un procédé pour rétablir une symétrie de la distribution des températures entre les côtés droit et gauche de la section transversale d'un écoulement de verre fondu qui a cheminé dans un feeder comportant au moins une zone de coude, une dissymétrie thermique ayant été induite par le passage dans un coude, le feeder comprenant :
- un canal d'écoulement formé à partir d'éléments en réfractaires et matériaux isolants et constitué d'une sole horizontale et de deux parois latérales ; et
- une voûte formée d'un toit en réfractaires et de parties latérales équipées de brûleurs,
caractérisé par le fait que, dans la zone du ou de chaque coude, on modifie le canal d'écoulement en choisissant une partie correspondante de sole inclinée, l'inclinaison étant choisie pour que le canal d'écoulement soit plus profond dans la région externe du coude que dans sa région interne, les hauteurs des deux parois latérales du canal étant modifiées en conséquence.

On peut choisir une inclinaison de sole dans la zone du coude ou de chaque coude de 2° à 12° par rapport à l'horizontale.

On peut choisir en particulier une inclinaison de sole dans la zone du coude ou de chaque coude de 9° à 10° par rapport à l'horizontale.

Par ailleurs, on choisit avantageusement une inclinaison de sole qui diminue progressivement à partir de la zone du coude jusqu'à l'horizontale, d'une part, dans une zone d'entrée du coude qui constitue une zone de raccordement avec le canal dans la branche d'entrée du feeder, et d'autre part, dans une zone de sortie du coude constituant une zone de raccordement avec le canal dans la branche de sortie du feeder.

Conformément à la présente invention, on peut modifier le canal d'écoulement dans une zone de coude pour laquelle la branche d'entrée et la branche de sortie forment un angle ≥ 80° et < 180°, en particulier un angle de 90°.

La présente invention a également pour objet un dispositif de transfert du verre fondu de la zone d'élaboration du verre à la zone de formage ou moulage, constitué par un feeder comportant au moins une zone de coude, le feeder comprenant :
- un canal d'écoulement formé à partir d'éléments en réfractaires et matériaux isolants et constitué d'une sole horizontale et de deux parois latérales ; et
- une voûte coiffant le canal, formée d'un toit en réfractaires et de parties latérales équipées de brûleurs,
caractérisé par le fait que, dans la région d'un coude, la sole a été modifiée pour présenter une inclinaison par rapport à l'horizontale de telle sorte que le canal d'écoulement soit plus profond dans la région externe du coude que dans la région interne.

L'inclinaison de sole dans la zone du coude ou de chaque coude peut être choisie comme indiqué plus haut.

Conformément à un mode de réalisation particulier, l'inclinaison de la sole diminue progressivement à partir de la zone de coude jusqu'à l'horizontale, d'une part, dans une zone d'entrée de coude qui constitue une zone de raccordement avec le canal dans la branche d'entrée du feeder, et d'autre part, dans une zone de sortie de coude constituant une zone de raccordement avec le canal dans la branche de sortie du feeder.

Selon l'invention, le canal d'écoulement a pu être modifié dans une zone de coude pour laquelle la branche d'entrée et la branche de sortie forment un angle ≥ 80° et < 180°, en particulier un angle de 90°.

Pour mieux illustrer l'objet de la présente invention, on va en décrire ci-après, à titre indicatif et non limitatif, un mode de réalisation particulier avec référence au dessin annexé.

Sur ce dessin :
- la Figure 1 représente une vue schématique en perspective d'une zone de coude d'un feeder selon l'invention ;
- la Figure 2 est, à plus grande échelle, une vue en perspective de la sole du canal d'écoulement du verre fondu dans une partie de coude ;
- la Figure 3 montre les courbes de niveau de vitesse (à gauche) et de température (à droite) sur un plan horizontal à mi-hauteur du verre pour la géométrie à sole plate et une veine chaude en entrée, dans le cas d'un verre foncé ;
- la Figure 4 montre les courbes de niveau de vitesse (à gauche) et de température (à droite) sur un plan horizontal à mi-hauteur du verre pour la géométrie à sole inclinée et une veine chaude en entrée, dans le cas d'un verre foncé ; et
- la Figure 5 montre les courbes de niveau de température sur un plan horizontal à mi-hauteur du verre pour la géométrie selon l'invention à sole inclinée et une veine chaude dans le cas d'un verre plus clair.

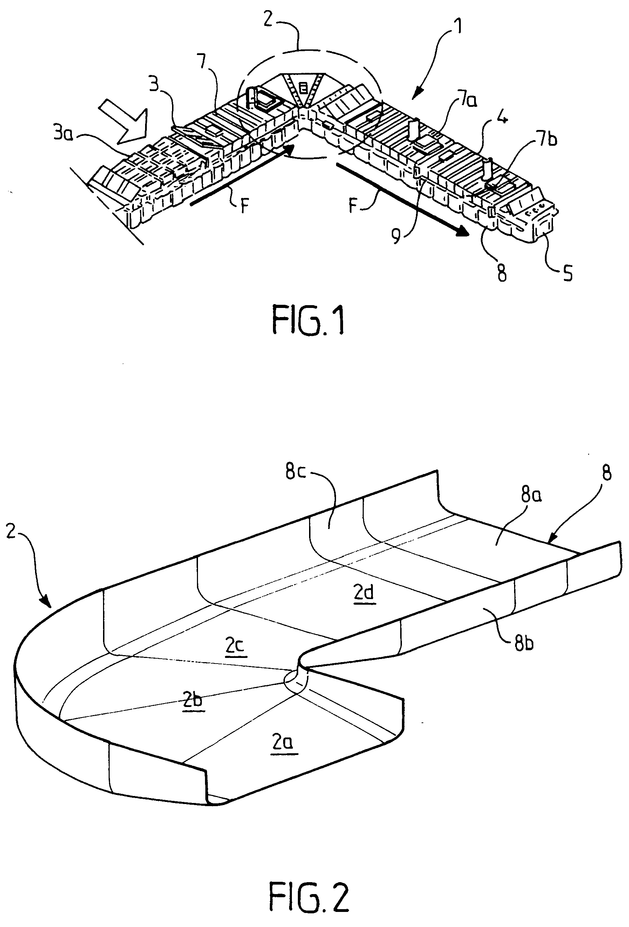

Si l'on se réfère à la Figure 1, on voit que l'on a représenté de façon schématique une partie d'un feeder 1 comportant une zone d'un coude 2, laquelle assure une transition entre une première branche 3 et une seconde branche 4 du feeder, les branches 3 et 4 formant un angle de 90°.

La branche 3 est alimentée transversalement par son côté extérieur 3a par l'écoulement du verre sortant du four de fusion servant à l'élaboration du verre. La branche 4 comporte, à son extrémité libre, le dispositif d'alimentation 5 d'une machine de formage.

Le trajet du verre dans le feeder est représenté par les flèches F.

La structure du feeder est connue et ne sera pas décrite plus en détail ici. On peut voir sur la Figure 1 la voûte 7 du feeder 1, formée d'un toit plat 7a et de parties latérales 7b équipées de brûleurs à l'emplacement 9. La voûte 7 coiffe le canal 8 (Figure 2) du feeder 1.

Les brûleurs 9 reposent sur la paroi horizontale supérieure des parois 8b, 8c du canal 8.

La partie du canal 8 dans la zone de coude 2 est représentée à plus grande échelle sur la Figure 2. Le canal 8 comporte une sole 8a et des parois latérales 8b, 8c, généralement perpendiculaires à la sole 8a.

Dans un canal 8 classique de feeder, la sole 8a est horizontale et les parois latérales 8b, 8c sont de même hauteur.

Selon la présente invention, la sole 8a a été modifiée pour présenter une partie inclinée vers le bas sur la partie extérieure dans la zone de coude 2.

Dans l'exemple illustré, on est parti d'un canal 8 présentant une sole 8a de 1300 mm de largeur et des parois latérales 8b, 8c de 200 mm de hauteur, et on a modifié comme suit la géométrie du canal 8 : la zone de coude 2 du canal 8 est divisée, selon le trajet F d'écoulement du verre, en :
- une zone 2a d'entrée de coude constituant une zone de raccordement avec le canal 8 dans la branche d'entrée 3 du feeder 1 ;
- une zone 2b de coude ;
- une zone 2c de sortie de coude, constituant une zone de raccordement avec le canal 8 dans la branche de sortie 4 du feeder 1.

Sur la Figure 2, on a représenté la zone 2d du canal 8, faisant suite à la zone 2c de sortie de coude et constituant une partie standard du canal 8 en raison du fait que l'on a procédé à des analyses de l'évolution de l'écoulement du verre dans cette zone 2d.

Les dimensions des zones 2a à 2d sont les suivantes :
- longueur des zones 2a et 2c : 610 mm ;
- hauteur de la paroi interne 8b dans la zone 2b : 102 mm sur un angle de 90° ;
- hauteur de la paroi externe 8c de la zone 2b : 302 mm sur un angle de 90° ; et
- longueur de la zone 2d pour l'étude de l'écoulement : 1600 mm.

La hauteur des parois externes 8c des zones 2a et 2c diminue progressivement en direction des zones standard disposées respectivement en entrée et en sortie du coude.

L'inclinaison vers le bas et vers l'extérieur de la sole 8a selon l'invention par rapport à l'horizontale est d'environ 10° dans la région 2b de coude. Cette inclinaison diminue progressivement dans les zones 2a et 2c en direction des zones standard d'entrée et de sortie du coude.

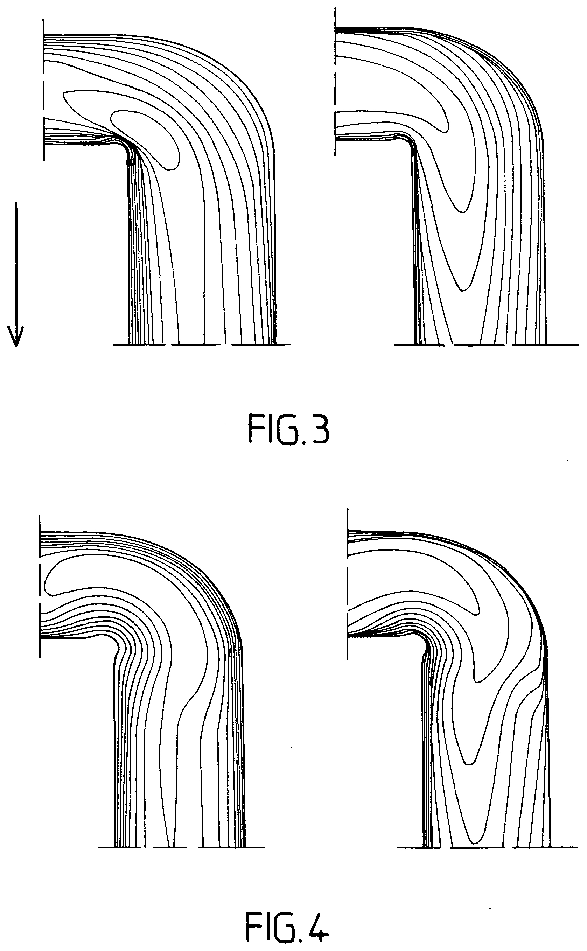

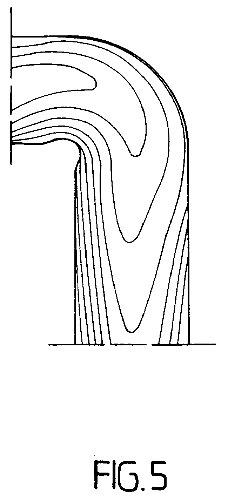

Sur les Figures 3 et 4 sont comparées les courbes de niveau de vitesse (à gauche sur ces deux Figures) et les courbes de niveau de température (à droite sur ces deux Figures) obtenus avec une géométrie de sole plate (Figure 3) et une géométrie de sole inclinée (Figure 4), ces géométries étant telles que décrites ci-dessus. Les courbes de niveau de vitesses et températures représentées sur les Figures 3 et 4 (ainsi que sur la Figure 5 ci-après) correspondent à l'écoulement à mi-hauteur dans un coude à sole respectivement plate et inclinée (comme représenté sur la Figure 2).

Le profil de température en entrée est dit à une veine chaude et correspond à un débit de 100 t/j.

Sur la partie gauche de la Figure 3, on peut voir que la courbe de niveau de vitesse du verre à mi-hauteur montre la déviation de l'écoulement vers l'intérieur du coude, avec des vitesses plus élevées dans cette région. L'asymétrie est maintenue jusqu'en sortie de canal. Sur le bord extérieur du coude, on peut observer des vitesses plus lentes.

La courbe de niveau de température sur la partie droite de la Figure 3 montre un fort refroidissement du verre à l'extérieur du coude, où la surface de contact avec les parois est plus grande. Le verre plus froid a une plus grande viscosité, ce qui accentue la réduction initiale des vitesses. La courbe de niveau de température conserve cette asymétrie avec des températures plus élevées du côté de la paroi interne, jusqu'à la sortie du canal.

Dans le cas de la sole inclinée, les courbes de niveau de vitesse (partie gauche de la Figure 4) et de température (partie droite de la Figure 4) montrent la déviation de l'écoulement vers l'extérieur du coude avec une zone chaude recentrée à la sortie du coude.

L'inclinaison de la sole permet de re-symétriser la veine chaude dans la largeur du feeder. La modification apparente du profil interne du coude sur la Figure 4 est due au fait que la coupe se situe dans le plan incliné de la sole à cet endroit.

Si l'on se réfère à la Figure 5, on peut voir que l'on a représenté la courbe de niveau de température de la même façon que sur la Figure 4, non plus pour un verre foncé mais pour un verre clair. Le profil de température en entrée est le même que pour le verre foncé. La courbe de niveau de température sur le plan horizontal à mi-hauteur du verre montre la déviation de l'écoulement vers l'extérieur du coude. L'inclinaison de la sole permet également de re-symétriser la veine chaude vers l'extérieur du coude.

## Revendications

1. Procédé pour rétablir ou tendre à rétablir une symétrie de la distribution des températures entre les côtés droit et gauche de la section transversale d'un écoulement de verre fondu qui a cheminé dans un feeder (1) comportant au moins une zone de coude (2), une dissymétrie thermique ayant été induite par le passage dans un coude (2), le feeder (1) comprenant :
- un canal d'écoulement (8) formé à partir d'éléments en réfractaires et matériaux isolants et constitué d'une sole horizontale (8a) et de deux parois latérales (8b ; 8c) ; et
- une voûte (7) coiffant le canal (8), formée d'un toit (7a) en réfractaires et de parties latérales (7b) équipées de brûleurs (9),
**caractérisé par le fait que**, dans la zone du ou de chaque coude (2), on modifie le canal d'écoulement (8) en choisissant une partie correspondante de sole (2b) inclinée, l'inclinaison étant choisie pour que le canal d'écoulement (8) soit plus profond dans la région externe du coude (2) que dans sa région interne, les hauteurs des deux parois latérales (8b ; 8c) du canal (8) étant modifiées en conséquence.

2. Procédé selon la revendication 1, **caractérisé par le fait que** l'on choisit une inclinaison de sole dans la zone du coude ou de chaque coude (2) de 2° à 12° par rapport à l'horizontale.

3. Procédé selon la revendication 2, **caractérisé par le fait que** l'on choisit une inclinaison de sole dans la zone du coude ou de chaque coude (2) de 9° à 10° par rapport à l'horizontale.

4. Procédé selon l'une des revendications 1 à 3, **caractérisé par le fait que** l'on choisit une inclinaison de sole qui diminue progressivement à partir de la zone du coude (2b) jusqu'à l'horizontale, d'une part, dans une zone d'entrée du coude (2a) qui constitue une zone de raccordement avec le canal (8) dans la branche d'entrée (3) du feeder (1), et d'autre part, dans une zone de sortie du coude (2c) constituant une zone de raccordement avec le canal dans la branche de sortie (4) du feeder (1).

5. Procédé selon l'une des revendications 1 à 4, **caractérisé par le fait que** l'on modifie le canal d'écoulement dans une zone de coude pour laquelle la branche d'entrée (3) et la branche de sortie (4) forment un angle ≥ 80° et < 180°, en particulier un angle de 90°.

6. Dispositif de transfert du verre fondu de la zone d'élaboration du verre à la zone de formage ou moulage, constitué par un feeder (1) comportant au moins une zone de coude (2), le feeder (1) comprenant :
- un canal d'écoulement (8) formé à partir d'éléments en réfractaires et matériaux isolants et constitué d'une sole horizontale (8a) et de deux parois latérales (8b ; 8c) ; et
- une voûte (7) coiffant le canal (8), formée d'un toit (7a) en réfractaires et de parties latérales (7b) équipées de brûleurs (9),
**caractérisé par le fait que**, dans la région d'un coude (2), la sole (8a) a été modifiée pour présenter une inclinaison (en 2b) par rapport à l'horizontale de telle sorte que le canal d'écoulement soit plus profond dans la région externe du coude (2) que dans la région interne.

7. Dispositif selon la revendication 6, **caractérisé par le fait que** l'inclinaison de sole dans la zone du coude ou de chaque coude (2) est de 2° à 12° par rapport à l'horizontale.

8. Dispositif selon la revendication 7, **caractérisé par le fait que** l'inclinaison de sole dans la zone du coude ou de chaque coude (2) est de 9° à 10° par rapport à l'horizontale.

9. Dispositif selon l'une des revendications 6 à 8, **caractérisé par le fait que** l'inclinaison de la sole (8) diminue progressivement à partir de la zone de coude (2b) jusqu'à l'horizontale, d'une part, dans une zone d'entrée de coude (2a) qui constitue une zone de raccordement avec le canal (8) dans la branche d'entrée (3) du feeder (1), et d'autre part, dans une zone de sortie de coude (2c) constituant une zone de raccordement avec le canal (8) dans la branche de sortie (4) du feeder (1).

10. Dispositif selon l'une des revendications 6 à 9, **caractérisé par le fait que** le canal d'écoulement a été modifié dans une zone de coude pour laquelle la branche d'entrée (3) et la branche de sortie (4) forment un angle ≥ 80° et < 180°, en particulier un angle de 90°.

## Patentansprüche

1. Verfahren zur Wiederherstellung oder zur Betreibung der Wiederherstellung einer Symmetrie in der Verteilung der Temperaturen zwischen der rechten und linken Seite des Querschnitts eines Glasschmelzeflusses, der in einen Feeder (1) geflossen ist, der mindestens eine Kniezone (2) aufweist, wobei eine thermische Asymmetrie durch den Durchfluss in ein Knie (2) bewirkt wurde, wobei der Feeder (1) Folgendes umfasst:
- einen Fließkanal (8), der aus feuerfesten Elementen und Isoliermaterialien geformt ist und von einer horizontalen Basis (8a) und von zwei Seitenwänden (8b; 8c) gebildet wird; und
- ein Gewölbe (7), das den Kanal (8) abdeckt und von einem feuerfesten Dach (7a) und von Seitenteilen (7b), die mit Brennern (9) versehen sind, gebildet wird,
**dadurch gekennzeichnet, dass** in der Zone des Knies oder jedes Knies (2) der Fließkanal (8) verändert wird, indem ein entsprechender geneigter Basisteil (2b) gewählt wird, wobei die Neigung gewählt ist, damit der Fließkanal (8) in der außen liegenden Region des Knies (2) tiefer ist als in seiner innen liegenden Region, wobei die Höhen der zwei Seitenwände (8b; 8c) des Kanals (8) in Folge dessen verändert werden.

2. Verfahren nach Anspruch 1, **dadurch gekennzeichnet, dass** eine Neigung der Basis in der Zone des Knies oder jedes Knies (2) von 2° bis 12° relativ zu der Horizontalen gewählt wird.

3. Verfahren nach Anspruch 2, **dadurch gekennzeichnet, dass** eine Neigung der Basis in der Zone des Knies oder jedes Knies (2) von 9° bis 10° relativ zu der Horizontalen gewählt wird.

4. Verfahren nach einem der Ansprüche 1 bis 3, **dadurch gekennzeichnet, dass** eine Neigung der Basis gewählt wird, die progressiv abnimmt von der Kniezone (2b) bis zur Horizontalen, einerseits, in einer Eingangszone des Knies (2a), die eine Verbindungszone mit dem Kanal (8) in dem Eingangszweig (3) des Feeders (1) bildet, und, andererseits, in einer Ausgangszone des Knies (2c), die eine Verbindungszone mit dem Kanal in dem Ausgangszweig (4) des Feeders (1) bildet.

5. Verfahren nach einem der Ansprüche 1 bis 4, **dadurch gekennzeichnet, dass** der Fließkanal in einer Kniezone verändert wird, bei welcher der Eingangszweig (3) und der Ausgangszweig (4) einen Winkel ≥ 80° und < 180°, insbesondere einen Winkel von 90°, bilden.

6. Vorrichtung zum Transportieren von Glasschmelze von der Glasbearbeitungszone zu der Form- oder Gießzone, die von einem Feeder (1) gebildet ist, der mindestens eine Kniezone (2) aufweist, wobei der Feeder (1) Folgendes umfasst:
- einen Fließkanal (8), der aus feuerfesten Elementen und Isoliermaterialien geformt ist und von einer horizontalen Basis (8a) und von zwei Seitenwänden (8b; 8c) gebildet wird; und
- ein Gewölbe (7), das den Kanal (8) abdeckt und von einem feuerfesten Dach (7a) und von Seitenteilen (7b), die mit Brennern (9) versehen sind, gebildet wird,
**dadurch gekennzeichnet, dass** in der Zone eines Knies (2) die Basis (8a) verändert wurde, um eine Neigung (in 2b) relativ zu der Horizontalen aufzuweisen, so dass der Fließkanal in der außen liegenden Region des Knies (2) tiefer ist als in der innen liegenden Region.

7. Vorrichtung nach Anspruch 6, **dadurch gekennzeichnet, dass** die Neigung der Basis in der Zone des Knies oder jedes Knies (2) von 2° bis 12° relativ zu der Horizontalen gewählt ist.

8. Vorrichtung nach Anspruch 7, **dadurch gekennzeichnet, dass** die Neigung der Basis in der Zone des Knies oder jedes Knies (2) von 9° bis 10° relativ zu der Horizontalen gewählt ist.

9. Vorrichtung nach einem der Ansprüche 6 bis 8, **dadurch gekennzeichnet, dass** die Neigung der Basis (8) progressiv abnimmt von der Kniezone (2b) bis zur Horizontalen, einerseits, in einer Eingangszone des Knies (2a), die eine Verbindungszone mit dem Kanal (8) in dem Eingangszweig (3) des Feeders (1) bildet, und, andererseits, in einer Ausgangszone des Knies (2c), die eine Verbindungszone mit dem Kanal (8) in dem Ausgangszweig (4) des Feeders (1) bildet.

10. Vorrichtung nach einem der Ansprüche 6 bis 9, **dadurch gekennzeichnet, dass** der Fließkanal in einer Kniezone verändert wurde, bei welcher der Eingangszweig (3) und der Ausgangszweig (4) einen Winkel ≥ 80° und < 180°, insbesondere einen Winkel von 90°, bilden.

## Claims

1. A method for re-establishing or tending to reestablish a symmetrical distribution of temperatures between the right-hand and left-hand sides of the cross section of a flow of molten glass that has been routed in a feeder (1) including at least one bend area (2), thermal asymmetry having been induced by flowing round a bend (2), the feeder (1) comprising:
- a flow channel (8) formed from refractory and insulative material elements and constituted of a horizontal sole plate (8a) and two lateral walls (8b; 8c); and
- a vault (7) capping the channel (8), formed of a refractory roof (7a) and lateral parts (7b) equipped with burners (9),
**characterized in that**, in the area of the or each bend (2), the flow channel (8) is modified by choosing a corresponding inclined sole plate portion (2b), the inclination being chosen so that the flow channel (8) is deeper in the outside region of the bend (2) than in its inside region, the heights of the two lateral walls (8b; 8c) of the channel (8) being modified accordingly.

2. The method as claimed in claim 1, **characterized in that** a sole plate inclination of 2° to 12° relative to the horizontal is chosen in the area of the bend or of each bend (2).

3. The method as claimed in claim 2, **characterized in that** a sole plate inclination of 9° to 10° relative to the horizontal is chosen in the area of the bend or of each bend (2).

4. The method as claimed in any one of claims 1 to 3, **characterized in that** a sole plate inclination is chosen that decreases progressively from the area of the bend (2b) to the horizontal, on the one hand, in an entry area of the bend (2a) that constitutes an area of connection with the channel (8) in the entry branch (3) of the feeder (1) and, on the other hand, in an exit area of the bend (2c) constituting an area of connection with the channel in the exit branch (4) of the feeder (1).

5. The method as claimed in any one of claims 1 to 4, **characterized in that** the flow channel is modified in a bend area for which the entry branch (3) and the exit branch (4) form an angle greater than or equal to 80° and less than 180°, in particular an angle of 90°.

6. A device for transferring molten glass from the area of production of the glass to the forming or molding area, constituted by a feeder (1) including at least one bend area (2), the feeder (1) comprising:
- a flow channel (8) formed from refractory and insulative material elements and constituted of a horizontal sole plate (8a) and two lateral walls (8b; 8c); and
- a vault (7) capping the channel (8), formed of a refractory roof (7a) and lateral parts (7b) equipped with burners (9),
**characterized in that**, in the region of a bend (2), the sole plate (8a) is modified to have an inclination (at 2b) relative to the horizontal such that the flow channel is deeper in the outside region of the bend (2) than in the inside region.

7. The device as claimed in claim 6, **characterized in that** a sole plate inclination is chosen in the area of the bend or of each bend (2) of 2° to 12° relative to the horizontal.

8. The device as claimed in claim 7, **characterized in that** a sole plate inclination is chosen in the area of the bend or of each bend (2) of 9° to 10° relative to the horizontal.

9. The device as claimed in any one of claims 6 to 8, **characterized in that** an inclination of the sole plate (8a) is chosen that decreases progressively from the area of the bend (2b) to the horizontal, on the one hand, in an entry area of the bend (2a) which constitutes an area of connection with the channel (8) in the entry branch (3) of the feeder (1) and, on the other hand, in an exit area of the bend (2c) constituting an area of connection with the channel (8) in the exit branch (4) of the feeder (1).

10. The device as claimed in any one of claims 6 to 9, **characterized in that** the flow channel is modified in a bend area for which the entry branch (3) and the exit branch (4) form an angle greater than or equal to 80° and less than 180°, in particular an angle of 90°.
